# EUROPEAN PATENT SPECIFICATION

(11) **EP 2 752 023 B1**
(45) Date of publication and mention of the grant of the patent: **25.12.2019**
(21) Application number: 12766810.1
(22) Date of filing: 17.09.2012
(51) Int. Cl.: H04N 21/434, H04N 21/4402, H04N 21/43, H04N 21/44

(54) **METHOD TO MATCH INPUT AND OUTPUT TIMESTAMPS IN A VIDEO ENCODER AND ADVERTISEMENT INSERTER**
VERFAHREN ZUM VERGLEICH VON EIN- UND AUSGANGSZEITSTEMPELN IN EINEM VIDEOCODIERER UND EINER WERBUNGSEINFÜGEMASCHINE
PROCÉDÉ POUR METTRE EN CORRESPONDANCE DES ESTAMPILLES TEMPORELLES D'ENTRÉE ET DE SORTIE DANS UN ENCODEUR VIDÉO ET UN DISPOSITIF D'INSERTION DE PUBLICITÉ

(30) Priority: 04.10.2011 US 201113252753
(43) Date of publication of application: 09.07.2014
(73) Proprietor: Google Technology Holdings LLC, Mountain View, CA 94043 (US)
(72) Inventor: NEMIROFF, Robert, S., Carlsbad CA 92011 (US); CHEN, Jing, Yang, San Diego CA 92131 (US); HU, Yendo, La Jolla CA 92037 (US); XUE, Shanhua, San Diego CA 92131 (US)
(74) Representative: Grant, David Michael
(86) International application number: PCT/US2012/055753
(87) International publication number: WO 2013/052265

(56) References cited:
- EP-A1- 1 473 935
- WO-A1-2005/055230
- WO-A2-02/25952

## Description

### 1. Field of the Invention

The present invention relates to a method and system for decoding and encoding video data frames. The present invention further relates to calculating a timestamp offset.

### 2. Background

A video transcoder may receive a compressed video data frame to be converted into a format usable by a media device. The video transcoder may decode the compressed video data frame into an uncompressed intermediate format. The video transcoder may then re-encode the uncompressed intermediate video frame into a new format usable by the media device.

Data channels passed through the transcoder may have Presentation timestamps (PTSs) embedded in the data to trigger time critical events, for example, advertisement insertion and data display. However, due to the decoding and re-encoding and to audio splicing, which involves audio delay, in order to insert advertisements, the PTS of the stream output by the transcoder may lose synchronization with the PTS input to the decoder and with the frame. Therefore, a need exists to synchronize the PTSs of a frame input to the encoder with the PTSs of the same frame when output by the encoder, and to maintain input stream timing in the instance of audio splicing.

PCT patent application publication no. WO 02/25952 describes a system for providing an accurate time reference for multiple input and output digital video signals of a transcoder that is particularly suited for use with MPEG data. The multiple streams are synchronized with a single master system time clock at the transcoder. Timing data from the master clock is compared to timing data from packets that are input to the transcoder to determine an offset. In particular, timing data, such as a program clock reference (PCR) field, is recovered from packets of different channels that are input to the transcoder. For each channel, timing data is then provided for packets that are output from the transcoder based on the offset and timing data of the master clock at the respective output times. In particular, the adjusted timing data is determined as a sum of the offset and an associated hardware error, less a delay (PcrSysDla) associated with the transcoder, which includes a lookahead delay and a buffer delay. The associated hardware error represents an error of the master clock and/or a system time clock of an encoder that encoded the particular channel.

PCT patent application publication no. WO2005/055230 describes a device and method for transcoding digital audio/video streams. Only the video data, from among audio/video data provided in the form of compressed digital streams such as TV broadcast streams, is transcoded, and then the transcoded video data is synchronized with the audio data. To synchronize the transcoded video data with the audio data, original Presentation Time Stamps (PTSs) of the video data before the transcoding are used for the transcoded video data, or new PTSs are used for the transcoded video data and PTSs of the audio data are updated based on the new PTSs. The transcoding and PTS synchronization is performed on the basis of sections having continuous PTS values. Accordingly, degradation of sound quality due to unnecessary audio data transcoding is avoided, while preventing synchronization mismatching between the audio and video data in the transcoding procedure.

### SUMMARY OF THE INVENTION

In accordance with aspects of the invention, there are provided a method, and a video processing system, as recited in the accompanying claims. A video transcoder may decode a compressed video data frame creating a decoded video data frame. The video transcoder may embed a network presentation timestamp in the decoded video data frame. The video transcoder may re-encode the decoded video data frame creating a transcoded video data frame. A field programmable gate array may compare the network presentation timestamp with a transcoder presentation timestamp to determine a timestamp offset. The invention is set out in the appended set of claims; the further examples called embodiments in the description are illustrative examples.

### BRIEF DESCRIPTION OF THE DRAWINGS

Understanding that these drawings depict only typical embodiments of the invention and are not therefore to be considered to be limiting of its scope, the invention will be described and explained with additional specificity and detail through the use of the accompanying drawings in which:
**Figure 1** illustrates, in a block diagram, one embodiment of a mobile system or electronic device to create a radio connection.
**Figure 2** illustrates, in a block diagram, one embodiment of a video transcoder.
**Figure 3** illustrates, in a flowchart, one embodiment of a method for processing a compressed video data frame.
**Figure 4** illustrates, in a flowchart, one embodiment of a method for determining a timestamp offset using a network presentation timestamp.
**Figure 5** illustrates, in a flowchart, one embodiment of a method for determining a program clock reference offset using multiple counters.

### DETAILED DESCRIPTION OF THE INVENTION

Additional features and advantages of the invention will be set forth in the description which follows, and in part will be obvious from the description, or may be learned by practice of the invention. The features and advantages of the invention may be realized and obtained by means of the instruments and combinations particularly pointed out in the appended claims. These and other features of the present invention will become more fully apparent from the following description and appended claims, or may be learned by the practice of the invention as set forth herein.

Various embodiments of the invention are discussed in detail below. While specific implementations are discussed, it should be understood that this is done for illustration purposes only. A person skilled in the relevant art will recognize that other components and configurations may be used without parting from the scope of the invention.

The present invention comprises a variety of embodiments, such as a method, an electronic device, and a video processing system, and other embodiments that relate to the basic concepts of the invention. The video processing system or electronic device may be any manner of computer, mobile device, or wired or wireless communication device.

A method, a video processing system, and an electronic device are disclosed. A video transcoder may decode a compressed video data frame creating a decoded video data frame. The video transcoder may embed a network presentation timestamp in the decoded video data frame. The video transcoder may re-encode the decoded video data frame creating a transcoded video data frame. The video transcoder may embed a network presentation timestamp in the transcoded video frame. A field programmable gate array may compare the network presentation timestamp with a transcoder presentation timestamp to determine a timestamp offset.

A video processing system may mark the time using a program clock reference. The video processing system may receive a compressed video frame having a decode timestamp and a presentation timestamp. The decode timestamp indicates when a compressed video frame is to be decoded. The presentation timestamp indicates when a compressed video frame is to be presented. Compressed video frames may be decoded or presented in a different order than the order in which the compressed video frames are received. The video processing system may decode the compressed video frame when the decode timestamp matches a program clock reference. The video processing system may present the decoded video frame when the presentation timestamp matches the program clock reference.

A video processing system may have an audio transport bypass for a video transcoder for pass-thru. The video processing system may adjust the presentation timestamp and program clock reference for audio bypass using a field programmable gate array. The video processing system may synchronize the video and audio data so that the output presentation timestamp matches the input presentation timestamp for each video frame.

First, the transcoder decoder may embed a presentation timestamp of each decoded video frame into the vertical blanking interval output of that frame. A vertical blanking interval is the interval between the end of one frame of video data and the beginning of the next frame of video data. Traditionally, the interval is blanked to allow a raster to move from the bottom of a screen to the top of the screen without leaving a line. The transcoder encoder may put that network presentation timestamp in the encoded bitstream of that transcoded video frame.

A new output program clock reference may be based on the program clock reference plus a timestamp offset. The timestamp offset may equal the transcoder presentation timestamp minus the network presentation timestamp. The network presentation timestamp is a presentation timestamp received from the network transport stream. The transcoder presentation timestamp is a presentation timestamp received with the transcoded compressed video data frame. The timestamp offset references difference between the transcoder presentation timestamp and the network presentation timestamp. The encoding program clock reference is the program clock reference in the transport output from the video encoder.

The network presentation timestamp may be placed in adaptation stuffing in packetized elementary stream header packet. Once extracted, the transcoder will replace the network presentation timestamp with adaptation stuffing bytes (0xFF).

The least significant bit of the 720p presentation timestamp and decode timestamp toggles since each 720p-5994 frame is 1501.5 90Khz (kilohertz) clock cycles. So sequential presentation timestamp values in display order may be 1501 and 1502. In order to preserve the least significant bit for both the network presentation timestamp and the transcoder presentation timestamp, the presentation timestamp offset may not change unless the absolute difference between the new computed values is more than one (1) with a negligible offset error.

The audio packets may be delayed since they have not gone through the transcoder. Delay may be up to 4 seconds for decoding and encoding delay.

Assuming an audio frame of 32ms (milliseconds), the output time of each audio frame may be presumed to be an input audio packet presentation timestamp minus 32ms. The output program clock reference may be used as reference. A margin that is rate dependent to keep the audio buffer as full as possible may be added in to improve accuracy.

Each packetized elementary stream may have several audio frames. Each audio frame may be output based on the audio rate. If the frames are sent out too fast, the decoder audio buffer may overflow. If the frames are sent out too slow, the decoder audio buffer may underflow. The audio rate may be extracted from the header. If the audio presentation timestamp with respect to the program clock reference is late or greater than 5 seconds, the audio packets in the memory may be dropped or flushed out to the transport until a presentation timestamp in range is found.

Alternately, the field programmable gate array may have a local counter at a frequency of at least 1Khz, producing an error no greater than 1ms. The field programmable gate array may have two counters to track the input program clock reference and the output program clock reference. For each program clock reference that arrives, the counter may be loaded with that program clock reference value.

For each program clock reference that is output after the presentation timestamp offset adjustment, a second counter may be loaded with the output program clock reference value. Both the input program clock reference counter and output program clock reference counter may then be clocked at 27Mhz (Megahertz). In a steady-state error free case, each counter may be within 1 tick of the next received program clock reference for each corresponding counter. The value may be one (1) tick off due to program clock reference jitter of the input and small differences in clock frequencies between the source program clock reference and local field programmable gate array 27Mhz clock. The difference between the input program clock reference counter and output program clock reference counter may be the delay from transport input to transport output caused by the decode and encode process time.

If a program clock reference discontinuity occurs, the difference between the input and output program clock reference counter may be very large and may not represent the decode and encode process time. Therefore, if the difference is negative or greater than the worst case decode and encode process time, the video processing system may ignore the difference and use the previous valid difference for the delay.

When the input program clock reference changes or a discontinuity occurs, the video processing system may compute the timestamp offset each frame and use that value, based on the transcoder presentation timestamp and the network presentation timestamp. When the timestamp offset changes, the program clock reference discontinuity bit may be set in the first program clock reference packet where the new timestamp offset is applied.

If a program clock reference discontinuity bit is set at the source, the field programmable gate array may compute the program clock reference offset between the original program clock reference and new program clock reference. The new timestamp offset may be the current timestamp offset minus the program clock reference offset between the original program clock reference and new program clock reference. As a check, when the next frame arrives, the difference between the transcoder presentation timestamp and encode presentation timestamp may be equal to the new timestamp offset within a 90Khz tick.

A local data stream may be stored on an on-board drive. Five to ten seconds prior to a switch time, the video processing system may read the transport stream from the drive. The video processing system may send the data to a field programmable gate array. The field programmable gate array may send the local data stream to the local decoder. The field programmable gate array may monitor the transcoder transport buffer level to provide flow control to the video processing system and avoid local decoder buffer overflow.

The local decoder may wait in an idle state, but output black or repeat frames from the video port. The clock time may be input from the network. The local timestamp stream may be sent to the local decoder several frames ahead of the switch time. The local decoder may start to decode the transport and have the first output frame ready to transmit. At that time, the local decoder may stop decoding until that first frame is transmitted. The local data input may signal the local decoder and related hardware at least 10ms early to begin outputting the local video. The local data input may send the splice timestamp value for that frame. The transcoder may embed the network presentation timestamp and a switching flag in the vertical blanking interval. The transcoder may embed the local presentation timestamp in the vertical blanking interval.

A field programmable gate array may perform the video switch. The field programmable gate array may execute the switch based on a switching flag embedded in the network video vertical blanking interval. The field programmable gate array may embed the network presentation timestamp, the local presentation timestamp and the switching flag in the vertical blanking interval. The transcoder may place the network presentation timestamp and local presentation timestamp in a packetized elementary stream stuffing in the packetized elementary stream header.

Output hardware may not detect any changes in the timestamp offset since the network presentation timestamp originated from the network feed and the transcoder presentation timestamp continues uninterrupted.

For audio, the switch may occur on the audio frame in which the presentation timestamp switch time is greater than the network audio presentation timestamp value. The field programmable gate array may monitor the switching flag in the video to determine the presentation timestamp switch time. The local presentation timestamp values may be replaced with the network presentation timestamp value, incorporating the timestamp offset. Note that the audio presentation timestamp values may not be the same values as the video presentation timestamp since audio and video have different frame rates.

Since the local timestamp originated from a disk, the audio timestamp rate may occur in bursts. The hardware may read the audio rate in the audio header and throttle the output of the audio packets at that audio rate plus a percentage to accommodate for the timestamp, the packetized elementary stream headers, the packetized elementary stream alignment, and others.

An audio switch may be executed as a "dirty switch." In the "dirty switch," the last network audio frame before the switch may be cut off and the first audio packet of the switch may contain an audio frame fragment. The "dirty switch" may result in an audible noise being heard.

An audio switch may be executed as a "seamless switch." The "seamless switch" may be a switch like ad-insert. The video processing system may complete last network audio frame. The video processing system may insert mute frames to keep the audio buffer from becoming empty. The video processing system may keep the presentation timestamp continuous. The first audio packet of the switch may contain a packetized elementary stream header.

An audio switch may be executed as a "restart switch." In the "restart switch," the video processing system may complete the last network audio frame before the switch. The video processing system may replace any fragment of the next frame with adaptation stuffing with the last packet containing that frame. The first audio packet of the switch may contain a packetized elementary stream header. The video processing system may empty, but receive intact audio frames.

The last audio frame prior to the splice time may be when the presentation timestamp of that frame is less than 32ms before the splice presentation timestamp time. When the last audio frame is detected, the last packet of that frame may be modified.

The field programmable gate array may compute the presentation timestamp of the local audio stream. The first packet may contain a data fragment from the previous audio frame. The video processing system may replace the partial frame with adaptation stuffing.

In some instances, each audio frame may not contain a packetized elementary stream header. The field programmable gate array may wait until the packetized elementary stream arrives before performing the audio switch. The field programmable gate array may leave a gap in audio of up to 700ms, the maximum packetized elementary stream period. In practice, the maximum packetized elementary stream period may be about 200ms.

If this is not acceptable, the field programmable gate array may track the presentation timestamp for the audio sync (synchronization) frames so that the switch may occur at the correct audio frame. The field programmable gate array may insert a packetized elementary stream header. The field programmable gate array may re-packetize subsequent audio frames.

The transcoder may signal the field programmable gate array at least 10 ms early to switch back to the primary video or audio. The field programmable gate array may monitor the switching flag in the network vertical blanking interval, perform the video switch, and place the network presentation timestamp in the output video vertical blanking interval. The network and local video output may be clock and frame synchronized. The output hardware may not detect any changes in the timestamp offset since the local video output embedded the network presentation timestamp in the vertical blanking interval and the network presentation timestamp continues uninterrupted.

Upon each power-cycle, the video delay through the field programmable gate array may change by a frame. The audio delay may be changed accordingly. The field programmable gate array may measure this variable delay. The transcoder may add the variable delay value to each audio presentation timestamp as the audio data set arrives. The field programmable gate array may force the audio to increase the delay time by the variable delay.

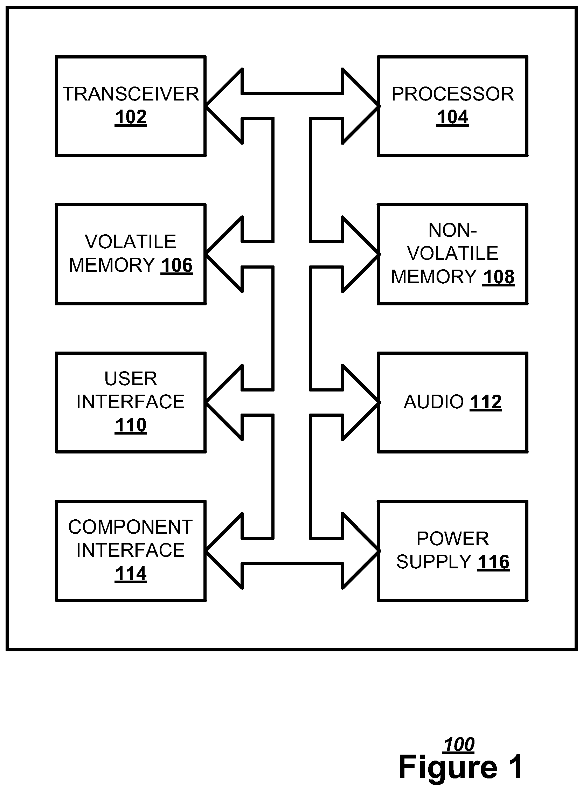

Referring now to **Figure 1**, a block diagram is provided illustrating an electronic device 100, capable of acting as a video processing system, in accordance with an embodiment of the present invention. For some embodiments of the present invention, the electronic device 100 may also support one or more applications for performing various communications with a network. Device software may be written in any programming language, such as C, C++, Java or Visual Basic, for example. Device software may run on an application framework, such as, for example, a Java® server or .NET ® framework

The electronic device 100 may include a transceiver 102, which is capable of sending and receiving data over the network.

The electronic device 100 may include a processor, or controller, 104 that executes stored programs. The controller/processor 104 may be any programmed processor known to one of skill in the art. However, the disclosed method may also be implemented on a general-purpose or a special purpose computer, a programmed microprocessor or microcontroller, peripheral integrated circuit elements, an application-specific integrated circuit or other integrated circuits, hardware/electronic logic circuits, such as a discrete element circuit, a programmable logic device, such as a programmable logic array, field programmable gate-array, or the like. In general, any device or devices capable of implementing the disclosed method as described herein may be used to implement the disclosed system functions of this invention.

The electronic device 100 may also include a volatile memory 106 and a non-volatile memory 108 to act as data storage for the processor 104. The volatile memory 106 or the non-volatile memory 108 may include one or more electrical, magnetic or optical memories such as a random access memory (RAM), cache, hard drive, or other memory device. The volatile memory 106 may have a cache to speed access to specific data. The non-volatile memory 108 may also be connected to a compact disc - read only memory (CD-ROM), digital video disc - read only memory (DVD-ROM), DVD read write input, tape drive, or other removable memory device that allows media content to be directly uploaded into the system.

The electronic device 100 may include a user input interface 110 that may comprise elements such as a keypad, display, touch screen, and the like. The electronic device 100 may also include a user output device that may comprise a display screen and an audio interface 112 that may comprise elements such as a microphone, earphone, and speaker. The electronic device 100 also may include a component interface 114 to which additional elements may be attached, for example, a universal serial bus (USB) interface or a geographical positioning system (GPS). Finally, the electronic device 100 may include a power supply 116.

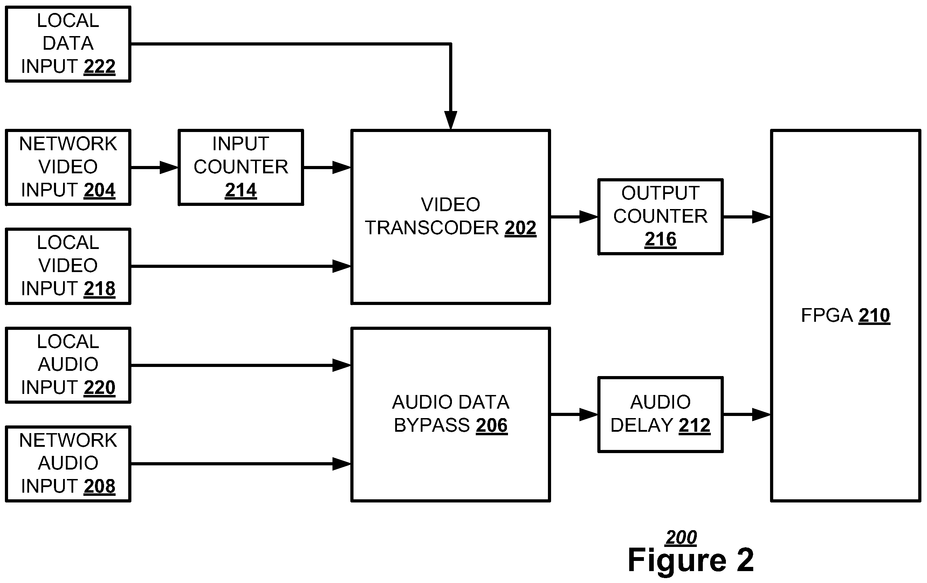

Referring now to **Figure 2****,** a block diagram is provided illustrating a video processing system 200 in accordance with an embodiment of the present invention. A video transcoder 202 may receive a compressed video data frame from a network video channel input 204, optionally via an input counter 214. The video transcoder 202 may decode the compressed video data frame and re-encode the compressed video data frame into a target video data format. A video transcoder 202 may have an audio data bypass 206 that receives an audio data set associated with the compressed video data frame via a network audio channel input 208. A field programmable gate array 210 may mix the transcoded video data frame with the associated audio data set for presentation to a user.

The video transcoder 202 may receive a network presentation timestamp from the network video channel input 204 along with the compressed video data frame. The video transcoder 202 may decode the compressed video data frame and determine the network presentation timestamp. The video transcoder 202 may embed the network presentation timestamp in the compressed video data frame. The video transcoder 202 may embed the network presentation timestamp in a vertical blanking interval. The video transcoder 202 may re-encode the compressed video data frame. The video transcoder 202 may embed the network presentation timestamp in the video frame header. The field programmable gate array 210 may receive the transcoded compressed video data frame and a transcoder timestamp. The field programmable gate array 210 may compare the network presentation timestamp to the transcoder presentation timestamp to determine the timestamp offset.

To properly mix the transcoded video data frame with the associated audio data set, the video processing system may determine a program clock reference offset. An input counter 216 may track an input program clock reference and an output counter 218 may track an output program clock reference. The audio data bypass 212 may delay the associated audio data set based on the input program clock reference and the output program clock reference. The field programmable gate array 210 may subtract the input program clock reference from the output program clock reference to determine a program clock reference offset. An audio delay 212 may use the program clock reference offset to delay the associated audio data set to match the compressed video data frame.

A local video channel input 218 may receive a local video stream for insertion after the compressed video data frame using a local offset. The local video stream may be sent to the video transcoder 202. A local audio channel input 220 may receive an associated local audio stream for insertion after the compressed video data frame using a network presentation timestamp. The audio data stream may go to the audio data bypass 206. A local data input channel 222 may feed a splice timestamp to the video transcoder, indicating the time that the local video stream and local audio stream is to be inserted. The local video channel input 218 and the local audio channel input 220 may be attached to a network or a local hard drive. The field programmable gate array 210 may make the insertion upon determining a switch frame using the program clock reference and the splice timestamp. The field programmable gate array 210 may switch to a compressed audio data set using the network presentation timestamp. The field programmable gate array 210 may switch to a pulse code modulated audio data set using the network presentation timestamp. The field programmable gate array 210 may determine a local offset by subtracting a local video presentation timestamp from the network presentation timestamp. The local offset may be added to the local audio presentation timestamps to synchronize the local audio presentation timestamps to the network presentation timestamp.

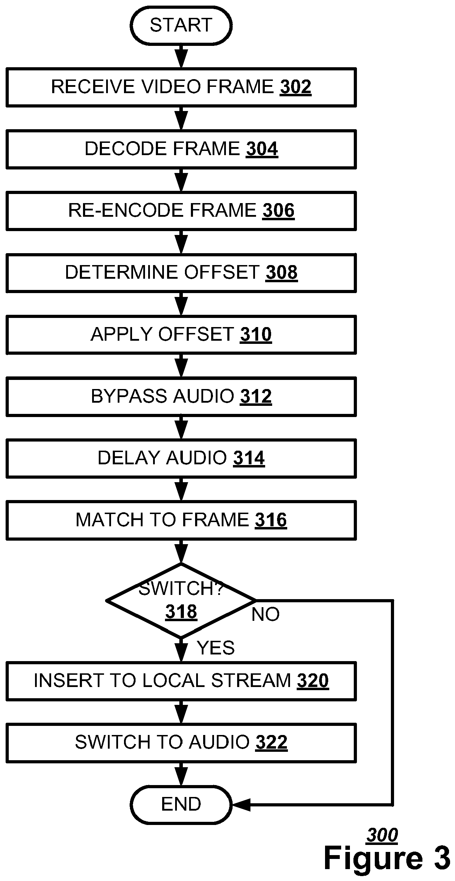

Referring now to **Figure 3****,** a flowchart is provided that illustrates a method 300 performed by the video processing system 200 for processing a compressed video data frame in accordance with an embodiment of the present invention. The video processing system 200 may receive a compressed video data frame (Block 302). The video processing system 200 may decode the compressed video data frame in a video transcoder 202 creating a decoded video data frame (Block 304). The video processing system 200 may re-encode the decoded video data frame in the video transcoder 202 creating a transcoded video data frame (Block 306). The video processing system 200 may determine a timestamp offset (Block 308). The video processing system 200 may apply the timestamp offset to a program clock reference, program presentation timestamp, and program decode timestamp to match the output program clock reference and the timestamps to the input program clock reference and timestamps (Block 310). The video processing system 200 may bypass an associated audio data set around the video transcoder 202 (Block 312). The video processing system 200 may delay the associated audio dataset based on a program clock reference offset, determined from an input program clock reference and an output program clock reference (Block 314). The video processing system 200 may delay the associated audio dataset to match the transcoded video data frame (Block 316).

If the video processing system identifies a switch frame using the splice timestamp (Block 318), the video processing system 200 may insert a local video stream using the splice timestamp (Block 320). The video processing system 200 may switch to a compressed audio data set using the splice timestamp (Block 322). The compressed audio data set may be a pulse code modulated audio data set.

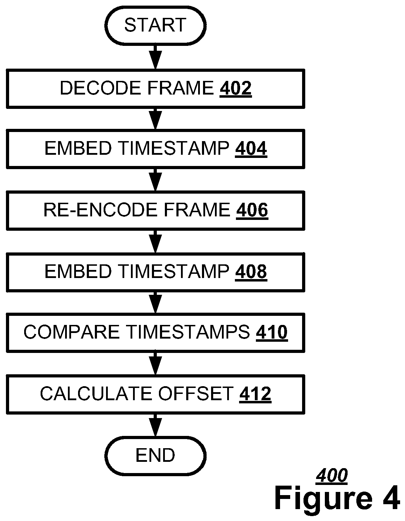

Referring now to **Figure 4****,** a flowchart is provided that illustrates a method 400 performed by the video processing system 200 for determining a timestamp offset using a network presentation timestamp in accordance with an embodiment of the present invention. The video processing system 200 may decode a compressed video data frame in a video transcoder 202 creating a decoded video data frame (Block 402). The video processing system 200 may embed a network presentation timestamp from a video frame header in the compressed video data frame in a vertical blanking interval of the decoded video data frame (Block 404). The video processing system 200 may re-encode the compressed video data frame in the video transcoder 202 creating a transcoded video data frame (Block 406). The video processing system 200 may embed the network presentation timestamp in a video frame header of the transcoded video data frame (Block 408). The video processing system 200 may compare the network presentation timestamp with a transcoder presentation timestamp (Block 410). The video processing system 200 may calculate a timestamp offset (Block 412).

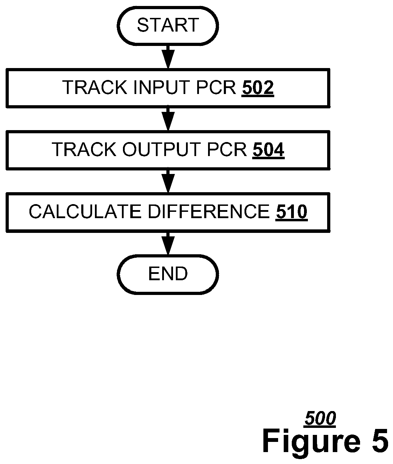

Referring now to **Figure 5****,** a flowchart is provided that illustrates a method 500 performed by the video processing system 200 for determining an audio pass through delay using multiple counters in accordance with an embodiment of the present invention. The video processing system 200 may use an input counter 216 to track an input program clock reference (PCR) (Block 502). The video processing system 200 may use an output counter 218 to track an output program clock reference (Block 504). The video processing system 200 may calculate the difference between the output program clock reference and the input program clock reference to determine the audio pass through delay (Block 506).

Embodiments within the scope of the present invention may also include computer-readable media for carrying or having computer-executable instructions or data structures stored thereon. Such computer-readable media can be any available media that can be accessed by a general purpose or special purpose computer. By way of example, and not limitation, such computer-readable media can comprise RAM, ROM, EEPROM, CD-ROM or other optical disk storage, magnetic disk storage or other magnetic storage devices, or any other medium which can be used to carry or store desired program code means in the form of computer-executable instructions or data structures. When information is transferred or provided over a network or another communications connection (either hardwired, wireless, or combination thereof) to a computer, the computer properly views the connection as a computer-readable medium. Thus, any such connection is properly termed a computer-readable medium. Combinations of the above should also be included within the scope of the computer-readable media.

Embodiments may also be practiced in distributed computing environments where tasks are performed by local and remote processing devices that are linked (either by hardwired links, wireless links, or by a combination thereof) through a communications network.

Computer-executable instructions include, for example, instructions and data which cause a general purpose computer, special purpose computer, or special purpose processing device to perform a certain function or group of functions. Computer-executable instructions also include program modules that are executed by computers in stand-alone or network environments. Generally, program modules include routines, programs, objects, components, and data structures, etc. that perform particular tasks or implement particular abstract data types. Computer-executable instructions, associated data structures, and program modules represent examples of the program code means for executing steps of the methods disclosed herein. The particular sequence of such executable instructions or associated data structures represents examples of corresponding acts for implementing the functions described in such steps.

Although the above description may contain specific details, they should not be construed as limiting the claims in any way. Other configurations of the described embodiments of the invention are part of the scope of this invention. For example, the principles of the invention may be applied to each individual user where each user may individually deploy such a system. This enables each user to utilize the benefits of the invention even if any one of the large number of possible applications do not need the functionality described herein. In other words, there may be multiple instances of the electronic devices each processing the content in various possible ways. It does not necessarily need to be one system used by all end users. Accordingly, the appended claims and their legal equivalents should only define the invention, rather than any specific examples given.

## Claims

1. A machine-implemented method, comprising:
receiving at a video transcoder a compressed video data frame with a first presentation timestamp;
decoding a compressed video data frame in the video transcoder creating a decoded video data frame;
embedding the first presentation timestamp in a vertical blanking interval of the decoded video data frame;
re-encoding the decoded video data frame in the video transcoder creating a transcoded video data frame;
comparing the first presentation timestamp with a second presentation timestamp to determine a timestamp offset, wherein the second presentation timestamp is associated with the transcoded video data frame; and
presenting audio data associated with the compressed video frame in synchronization with the transcoded video data frame based on the determined timestamp offset.

2. The method of claim 1, further comprising:
bypassing an associated audio data set around the video transcoder.

3. The method of claim 2, further comprising:
delaying the associated audio data set to match the transcoded video data frame.

4. The method of claim 1, further comprising:
tracking an input program clock reference with an input counter; and
tracking an output program clock reference with an output counter, the difference between the input program clock reference counter and the output program clock reference counter providing an indication of delay due to decoding and re-encoding process time in the video transcoder.

5. The method of claim 4, further comprising:
delaying an associated audio data set using a program clock reference offset, the program clock reference offset being determined by a difference between the input program clock reference and the output program clock reference.

6. The method of claim 1, further comprising:
receiving at the video transcoder a local video stream via a local video channel input;
inserting the local video stream after the compressed video data frame using a splice timestamp.

7. The method of claim 1, further comprising:
identifying a switch frame in a video stream of video data frames using a splice timestamp.

8. The method of claim 1, further comprising:
switching to a compressed audio data set using a splice timestamp.

9. The method of claim 1, further comprising:
switching to a pulse code modulated audio data set using a splice timestamp.

10. A video processing system comprising:
a network video channel input that is configured to receive a compressed video data frame with a first presentation timestamp;
a video transcoder that is configured to decode the compressed video data frame creating a decoded video data frame, embed the first presentation timestamp in a vertical blanking interval of the decoded video data frame, and re-encode the decoded video data frame creating a transcoded video data frame;
the video processing system being configured to compare the first presentation timestamp with a second presentation timestamp to determine a timestamp offset, wherein the second presentation timestamp is associated with the transcoded video data frame; and
the video processing system being configured to present audio data associated with the compressed video data frame in synchronization with the transcoded video data frame based on the determined timestamp offset.

11. The video processing system of claim 10, further comprising:
an audio data bypass that receives an associated audio data set that has not passed through the video transcoder.

12. The video processing system of claim 11, wherein the audio data bypass is configured to delay the associated audio data set to match the compressed video data frame.

13. The video processing system of claim 10, further comprising:
a local video channel input that receives a local video stream for insertion after the compression video data frame.

## Patentansprüche

1. Maschinenimplementiertes Verfahren, umfassend:
Empfangen eines komprimierten Videodatenrahmens mit einem ersten Präsentationszeitstempel in einem Videotranscoder;
Decodieren eines komprimierten Videodatenrahmens im Videotranscoder, wobei ein decodierter Videodatenrahmen erzeugt wird;
Einbetten des ersten Präsentationszeitstempels in ein vertikales Austastintervall des decodierten Videodatenrahmens;
Neucodieren des decodierten Videodatenrahmens im Videotranscoder, wobei ein transcodierter Videodatenrahmen erzeugt wird;
Vergleichen des ersten Präsentationszeitstempels mit einem zweiten Präsentationszeitstempel, um einen Zeitstempelversatz zu bestimmen, worin der zweite Präsentationszeitstempel dem transcodierten Videodatenrahmen zugeordnet ist; und
auf dem bestimmten Zeitstempelversatz beruhendes Präsentieren von Audiodaten, die dem komprimierten Videorahmen zugeordnet sind, in Synchronisation mit dem transcodierten Videodatenrahmen.

2. Verfahren nach Anspruch 1, ferner umfassend:
Umleiten eines zugeordneten Audiodatensatzes am Videotranscoder vorbei.

3. Verfahren nach Anspruch 2, ferner umfassend:
Verzögern des zugeordneten Audiodatensatzes, damit er zum transcodierten Videodatenrahmen passt.

4. Verfahren nach Anspruch 1, ferner umfassend:
Verfolgen einer Eingangsprogrammtaktreferenz mit einem Eingangszähler; und
Verfolgen einer Ausgangsprogrammtaktreferenz mit einem Ausgangszähler, wobei die Differenz zwischen dem Eingangsprogrammtaktreferenzzähler und dem Ausgangsprogrammtaktreferenzzähler eine Angabe der Verzögerung aufgrund der Decodier- und Neucodierverarbeitungsdauer im Videotranscoder bereitstellt.

5. Verfahren nach Anspruch 4, ferner umfassend:
Verzögern eines zugeordneten Audiodatensatzes unter Verwendung eines Programmtaktreferenzversatzes, wobei der Programmtaktreferenzversatz durch eine Differenz zwischen der Eingangsprogrammtaktreferenz und der Ausgangsprogrammtaktreferenz bestimmt wird.

6. Verfahren nach Anspruch 1, ferner umfassend:
Empfangen eines lokalen Videostroms im Videotranscoder über einen lokalen Videokanaleingang;
Einfügen des lokalen Videostroms nach dem komprimierten Videodatenrahmen unter Verwendung eines Zusammenfügungszeitstempels.

7. Verfahren nach Anspruch 1, ferner umfassend:
Identifizieren eines Umschaltrahmens in einem Videostrom von Videodatenrahmen unter Verwendung eines Zusammenfügungszeitstempels.

8. Verfahren nach Anspruch 1, ferner umfassend:
Umschalten auf einen komprimierten Audiodatensatz unter Verwendung eines Zusammenfügungszeitstempels.

9. Verfahren nach Anspruch 1, ferner umfassend:
Umschalten auf einen pulscodemodulierten Audiodatensatz unter Verwendung eines Zusammenfügungszeitstempels.

10. Videoverarbeitungssystem, umfassend:
einen Netzwerk-Videokanaleingang, der dafür konfiguriert ist, einen komprimierten Videodatenrahmen mit einem ersten Präsentationszeitstempel zu empfangen;
einen Videotranscoder, der dafür konfiguriert ist, den komprimierten Videodatenrahmen zu decodieren, wobei er einen decodierten Videodatenrahmen erzeugt, den ersten Präsentationszeitstempel in ein vertikales Austastintervall des decodierten Videodatenrahmens einzubetten und den decodierten Videodatenrahmen neu zu codieren, wobei er einen transcodierten Videodatenrahmen erzeugt;
wobei das Videoverarbeitungssystem dafür konfiguriert ist, den ersten Präsentationszeitstempel mit einem zweiten Präsentationszeitstempel zu vergleichen, um einen Zeitstempelversatz zu bestimmen, worin der zweite Präsentationszeitstempel dem transcodierten Videodatenrahmen zugeordnet ist; und
wobei das Videoverarbeitungssystem dafür konfiguriert ist, Audiodaten, die dem komprimierten Videodatenrahmen zugeordnet sind, auf der Grundlage des bestimmten Zeitstempelversatzes in Synchronisation mit dem transcodierten Videodatenrahmen zu präsentieren.

11. Videoverarbeitungssystem nach Anspruch 10, ferner umfassend:
eine Audiodatenumleitung, die einen zugeordneten Audiodatensatz empfängt, der den Videotranscoder nicht durchlaufen hat.

12. Videoverarbeitungssystem nach Anspruch 11, worin die Audiodatenumleitung dafür konfiguriert ist, den zugeordneten Audiodatensatz zu verzögern, damit er zum komprimierten Videodatenrahmen passt.

13. Videoverarbeitungssystem nach Anspruch 10, ferner umfassend:
einen lokalen Videokanaleingang, der einen lokalen Videostrom zum Einfügen nach dem komprimierten Videodatenrahmen empfängt.

## Revendications

1. Procédé mis en œuvre par machine, comprenant :
la réception, au niveau d'un transcodeur vidéo, d'une trame de données vidéo comprimée qui présente une première estampille temporelle de présentation ;
le décodage d'une trame de données vidéo comprimée dans le transcodeur vidéo, d'où la création d'une trame de données vidéo décodée ;
l'intégration de la première estampille temporelle de présentation dans un intervalle de suppression verticale de la trame de données vidéo décodée ;
le codage à nouveau de la trame de données vidéo décodée dans le transcodeur vidéo, d'où la création d'une trame de données vidéo transcodée ;
la comparaison de la première estampille temporelle de présentation avec une seconde estampille temporelle de présentation de manière à déterminer un décalage d'estampille temporelle, dans lequel la seconde estampille temporelle de présentation est associée à la trame de données vidéo transcodée ; et
la présentation de données audio qui sont associées à la trame de données vidéo comprimée en synchronisation avec la trame de données vidéo transcodée sur la base du décalage d'estampille temporelle déterminé.

2. Procédé selon la revendication 1, comprenant en outre :
la dérivation d'un jeu de données audio associé en contournant le transcodeur vidéo.

3. Procédé selon la revendication 2, comprenant en outre :
le retardement du jeu de données audio associé de manière à faire en sorte qu'il soit en correspondance avec la trame de données vidéo transcodée.

4. Procédé selon la revendication 1, comprenant en outre :
le suivi d'une référence d'horloge de programme d'entrée à l'aide d'un compteur d'entrées ; et
le suivi d'une référence d'horloge de programme de sortie à l'aide d'un compteur de sorties, la différence entre le compteur de références d'horloge de programme d'entrée et le compteur de références d'horloge de programme de sortie fournissant une indication du retard qui est dû au temps de processus de décodage et de codage à nouveau dans le transcodeur vidéo.

5. Procédé selon la revendication 4, comprenant en outre :
le retardement d'un jeu de données audio associé en utilisant un décalage de référence d'horloge de programme, le décalage de référence d'horloge de programme étant déterminé au moyen d'une différence entre la référence d'horloge de programme d'entrée et la référence d'horloge de programme de sortie.

6. Procédé selon la revendication 1, comprenant en outre :
la réception, au niveau du transcodeur vidéo, d'un flux de données vidéo local via une entrée de canal vidéo local ; et
l'insertion du flux de données vidéo local après la trame de données vidéo comprimée en utilisant une estampille temporelle de jonction.

7. Procédé selon la revendication 1, comprenant en outre :
l'identification d'une trame de commutation dans un flux de données vidéo qui est constitué par des trames de données vidéo en utilisant une estampille temporelle de jonction.

8. Procédé selon la revendication 1, comprenant en outre :
la commutation sur un jeu de données audio comprimé en utilisant une estampille temporelle de jonction.

9. Procédé selon la revendication 1, comprenant en outre :
la commutation sur un jeu de données audio modulé par impulsions et codage en utilisant une estampille temporelle de jonction.

10. Système de traitement de vidéo comprenant :
une entrée de canal vidéo de réseau qui est configurée de manière à ce qu'elle reçoive une trame de données vidéo comprimée qui présente une première estampille temporelle de présentation ;
un transcodeur vidéo qui est configuré de manière à ce qu'il décode la trame de données vidéo comprimée, d'où la création d'une trame de données vidéo décodée, de manière à ce qu'il intègre la première estampille temporelle de présentation dans un intervalle de suppression verticale de la trame de données vidéo décodée et de manière à ce qu'il code à nouveau la trame de données vidéo décodée, d'où la création d'une trame de données vidéo transcodée ;
le système de traitement de vidéo étant configuré de manière à ce qu'il compare la première estampille temporelle de présentation avec une seconde estampille temporelle de présentation de manière à ce qu'il détermine un décalage d'estampille temporelle, dans lequel la seconde estampille temporelle de présentation est associée à la trame de données vidéo transcodée ; et
le système de traitement de vidéo étant configuré de manière à ce qu'il présente des données audio qui sont associées à la trame de données vidéo comprimée en synchronisation avec la trame de données vidéo transcodée sur la base du décalage d'estampille temporelle déterminé.

11. Système de traitement de vidéo selon la revendication 10, comprenant en outre :
un moyen d'évitement pour données audio qui reçoit un jeu de données audio associé qui n'est pas passé au travers du transcodeur de vidéo.

12. Système de traitement de vidéo selon la revendication 11, dans lequel le moyen d'évitement pour données audio est configuré de manière à ce qu'il retarde le jeu de données audio associé de manière à faire en sorte qu'il soit en correspondance avec la trame de données vidéo comprimée.

13. Système de traitement de vidéo selon la revendication 10, comprenant en outre :
une entrée de canal vidéo local qui reçoit un flux de données vidéo local dans le but de son insertion après la trame de données vidéo comprimée.
